# DEMANDE DE BREVET EUROPEEN

(11) **EP 2 098 420 A1**
(43) Date de publication de la demande: **09.09.2009**
(21) Numéro de dépôt: 08102419.2
(22) Date de dépôt: 08.03.2008
(51) Int. Cl.: B60S 1/38

(54) **Lame d'essuyage universelle pour balai d'essuie-glace**

(71) Demandeur: Mecatech (SA), 1364 Luxembourg (LU)
(72) Inventeur: Mersch, Patrick, L-5722 Aspelt (LU)
(74) Mandataire: Roman, Alexis

(57) **Abrégé**

Lame d'essuyage en matériau élastique pour balai d'essuie-glace (2), comportant:
- une partie inférieure formée par une lèvre d'essuyage (1a),
- une partie médiane comportant des rainures longitudinales (1b) opposées l'une à l'autre,
- une partie supérieure formée par une dorsale (1c) s'étendant vers le haut, se caractérisant par le fait que la dorsale (1c) est reliée à la partie médiane par une entretoise de liaison (1d) disposée au dessus des rainures longitudinales (1b), ladite entretoise étant formée entre deux rétrécissements en forme de rainures longitudinales (10d) opposées l'une à l'autre, lesdites rainures formant un guide de découpe longitudinal.
Pour découper la partie de la dorsale où se positionnent le dispositif de raccordement et/ou les embouts ou pour découper toute la partie dorsale, il suffit de découper une partie ou la totalité de la dorsale, en s'aidant du guide de découpe.

## Description

### Domaine technique de l'invention.

La présente invention a pour objet une lame d'essuyage universelle pour balai d'essuie-glace de véhicule. Elle concerne également un balai d'essuie-glace comportant cette lame d'essuyage. Elle concerne encore un procédé pour monter la lame d'essuyage sur le balai d'essuie-glace. Elle concerne en outre un véhicule automobile équipé d'un tel balai d'essuie-glace.

L'invention concerne le domaine technique des accessoires pour véhicules automobiles et en particulier les lames d'essuyage de rechange pour balai d'essuie-glace.

### État de la technique.

La majorité des balais d'essuie-glace pour véhicule, comportent à ce jour une lame d'essuyage allongée en matériau élastique montée sur un élément de support allongé formé de deux rails élastiques parallèles, ledit élément de support comportant sur son segment médian un dispositif de raccordement sur un bras d'essuie-glace.

Ce type de balai d'essuie-glace est connu depuis longtemps et a notamment été décrit dans les documents suivants : US 3.192.551 (APPEL), US 2007/0017056 (COOK et al), WO 01/89890 (BOSCH), WO 2006/069648 (VALEO), WO 2007/011996 (VALEO), EP 0.935.546 (BOSCH), EP 1.053.145 (BOSCH), EP 1.299.273 (VALEO) ou encore EP 1.512.594 (FEDERAL MOGUL SA). Sous la pression du ressort du bras d'essuie-glace, le balai se conforme aux courbures des pare-brise, par l'intermédiaire des deux rails élastiques. Ces deux rails maintiennent en même temps la lame caoutchouc en serrant celle-ci de chaque côté. L'ensemble est généralement tenu par deux embouts aux extrémités et un clip-pivot central formant le dispositif de raccordement sur un bras d'essuie-glace.

Généralement, la lame d'essuyage comporte :
- une partie inférieure formée par une lèvre d'essuyage,
- une partie médiane comportant des rainures longitudinales opposées l'une à l'autre,
- éventuellement une partie supérieure formée par une dorsale s'étendant vers le haut.

A ce jour, il existe principalement trois générations de lame d'essuyage :
- celle dont la dorsale est directement moulée sur la partie médiane de la lame. Par exemple : US 3.317.945 (LUDWIG et al), US 2007/0017056 (COOK et al), EP 0.935.546 (BOSCH), WO 2007/011996 (VALEO),
- celle dont la dorsale est amovible et rapportée sur la partie médiane de la lame. Par exemple : EP 1.053.145 (BOSCH), EP 1.512.594 (FEDERAL MOGUL SA), DE 20.2005.020.650 U1 (BOSCH), WO 2007/124989 (BOSCH),
- celle ne comportant aucune dorsale. C'est notamment le cas des balais d'essuie-glace de lunettes arrières.

Selon le type de lame utilisée, le balai d'essuie-glace ne présente pas la même configuration. En particulier, le dispositif de raccordement sur le bras d'essuie-glace et les embouts aux extrémités ont des configurations différentes selon que la lame d'essuyage comporte une dorsale intégrée, une dorsale amovible ou aucune dorsale. Aujourd'hui, lorsqu'un utilisateur souhaite changer une lame d'essuyage usagée, il doit nécessairement acheter une lame spécifiquement conçue pour son balai d'essuie-glace.

Face à cet état des choses, l'objectif principal que vise à atteindre l'invention est de proposer une lame d'essuyage universelle, c'est-à-dire une lame qui puisse venir en remplacement d'une lame usagée dont la dorsale est intégrée, d'une lame usagée dont la dorsale est amovible, ou d'une lame usagée ne comportant aucune dorsale.

### Divulgation de l'invention.

La solution proposée par l'invention est une lame d'essuyage du type décrit précédemment dans laquelle la dorsale est reliée à la partie médiane de ladite lame par une entretoise de liaison disposée au dessus des rainures longitudinales, ladite entretoise étant formée entre deux rétrécissements en forme de rainures longitudinales opposées l'une à l'autre, lesdites rainures formant un guide de découpe longitudinal.

Ainsi, lorsque l'utilisateur souhaite changer une lame d'essuyage usagée comportant une dorsale intégrée, il lui suffit d'utiliser telle qu'elle la lame objet de l'invention. L'utilisateur pourra, si cela s'avère nécessaire, découper la partie de la dorsale où se positionnent le dispositif de raccordement sur le bras d'essuie-glace et/ou les embouts aux extrémités, en s'aidant du guide de découpe.

Lorsque l'utilisateur souhaite changer une lame d'essuyage usagée ne comportant initialement aucune dorsale, cette dernière étant rapportée ou inexistante, il lui suffit de découper la totalité de la dorsale, en s'aidant du guide de découpe.

Selon une caractéristique avantageuse de l'invention, la dorsale peut basculer autour de l'entretoise. Ainsi, lors de l'avancement du véhicule, la résistance de l'air sur la surface de la dorsale tournée vers le vent permet de faire basculer cette dernière autour de l'entretoise de sorte que ladite dorsale forme un déflecteur.

Selon une autre caractéristique avantageuse de l'invention, la dorsale a une section transversale présentant un profil symétrique par rapport à un plan de symétrie passant par son centre et la traversant longitudinalement. La symétrie de la dorsale présente plusieurs avantages :
- Elle permet le montage indifféremment du balai d'essuie-glace des deux côtés d'un pare-brise. En effet, pour maximiser le champ de vision balayé du conducteur (au détriment de celui du passager), les axes de rotation des balais d'essuie-glace sont typiquement décalés du côté du conducteur. Dans le cas d'un véhicule avec volant à gauche, les axes sont à gauche et dans le cas d'un véhicule avec volant à droite, les axes sont à droite. Un déflecteur asymétrique n'étant en appui que dans un seul sens, il faudrait, pour pouvoir monter un même balai d'essuie-glace, indifféremment sur des axes de rotation situés à droite ou à gauche, que le dispositif de raccordement sur le bras d'essuie-glace soit facilement réversible (ce qui n'est généralement pas le cas), ou utilisable dans les deux sens (ce qui n'est pas le cas dans la très grande majorité des configurations existantes).
- Pour bien fonctionner dans le cas fréquent des angles de balayage supérieurs à 90°, angle à partir duquel un déflecteur asymétrique classique a une portée nulle, voire négative, de sorte que la lame n'est plus parfaitement plaquée sur la vitre. En effet, avec une forme symétrique, la dorsale aura toujours une surface face au vent apte à faire plaque la lame contre la vitre, même pour des angles de balayage supérieurs à 90°.
- Dans le cas de lames de rechange (à la différence des balais complets) : pour annuler les erreurs de sens de montage que peuvent facilement commettre les mécaniciens, même expérimentés.

Selon encore une autre caractéristique avantageuse de l'invention, l'entretoise de liaison a une épaisseur telle qu'elle puisse être arrachée à la main. De cette façon, il n'est pas utile d'utiliser un outil coupant pour enlever tout ou partie de la dorsale. Pour ce faire, l'entretoise est préférentiellement en caoutchouc et a une épaisseur inférieure ou égale à 1 mm.

Selon encore une autre caractéristique avantageuse de l'invention, la dorsale à la forme générale d'un T inversé, les deux barres dudit T étant reliées par des parties courbes.

Selon encore une autre caractéristique avantageuse de l'invention, la dorsale comporte des marques en relief ou en creux sur son enveloppe extérieure, lesdites marques permettant de segmenter ladite dorsale. Il peut ainsi être facile de repérer les parties de la dorsale où se positionnent le dispositif de raccordement sur le bras d'essuie-glace et les embouts aux extrémités.

Un autre aspect de l'invention concerne un balai d'essuie-glace pour véhicule, comportant une lame d'essuyage allongée en matériau élastique montée sur un élément de support allongé formé de deux rails élastiques parallèles, ledit élément de support comportant sur son segment médian un dispositif de raccordement sur un bras d'essuie-glace. Ce balai est remarquable en ce que la lame d'essuyage est conforme aux caractéristiques précédentes, les deux rails élastiques étant chacun positionnés dans une rainure longitudinale de la partie médiane de ladite lame, la lèvre d'essuyage étant positionnée du côté opposé au dispositif de raccordement.

Encore un autre aspect de l'invention concerne un procédé pour monter une lame d'essuyage conforme aux caractéristiques précédentes sur le balai d'essuie-glace décrit précédemment, dans lequel avant de positionner les rails élastiques dans les rainures longitudinales de ladite lame, on enlève complètement la dorsale, à la main ou au moyen d'un outil coupant en s'aidant du guide de découpe.

Encore un autre aspect de l'invention concerne un procédé pour monter une lame d'essuyage conforme aux caractéristiques précédentes sur le balai d'essuie-glace décrit précédemment, dans lequel avant de positionner les rails élastiques dans les rainures longitudinales de ladite lame, on enlève le segment médian de la dorsale correspondant sensiblement à l'encombrement du dispositif de raccordement. Le segment est enlevé à la main ou au moyen d'un outil coupant en s'aidant du guide de découpe.

Encore un autre aspect de l'invention concerne un procédé pour monter une lame d'essuyage conforme aux caractéristiques précédentes sur le balai d'essuie-glace décrit précédemment, dans lequel avant de positionner les rails élastiques dans les rainures longitudinales de ladite lame, on enlève les segments de la dorsale situés aux extrémités de cette dernière, lesdits segments enlevés correspondant sensiblement à l'encombrement de capuchons de protection utilisés pour maintenir en position lesdits rails élastiques. Les segments sont enlevés à la main ou au moyen d'un outil coupant en s'aidant du guide de découpe.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique montrant la section transversale de la lame d'essuyage conforme à un mode de réalisation de l'invention,
- les figures 2 et 3 montrent schématiquement le basculement de la dorsale autour de l'entretoise de liaison,
- la figure 4 est une vue schématique en perspective de la lame d'essuyage objet de l'invention,
- la figure 5 est une vue schématique de face d'un mode de réalisation du bras d'essuie-glace objet de l'invention,
- la figure 6 est une vue schématique montrant la section transversale de la lame d'essuyage conforme à un second mode de réalisation.

### Modes de réalisation de l'invention.

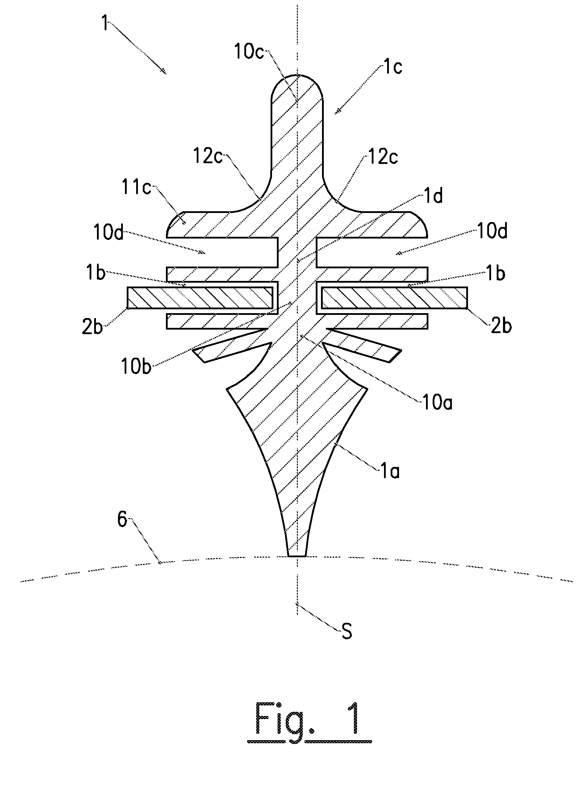

En se référant à la figure 1, la lame d'essuyage 1 comporte :
- une partie inférieure formée par une lèvre d'essuyage 1a,
- une partie médiane comportant des rainures longitudinales 1b opposées l'une à l'autre,
- une partie supérieure formée par une dorsale 1c s'étendant vers le haut.

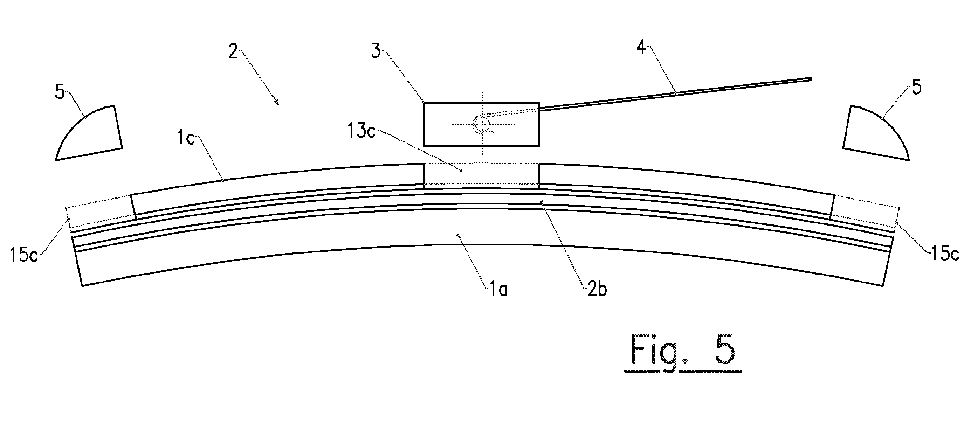

En se rapportant a la figure 5, cette lame d'essuyage 1 est destinée à être montée sur un balai d'essuie-glace 2 pour véhicule. D'une manière connue de l'homme du métier, la lame 1 est montée sur un élément de support allongé formé de deux rails élastiques 2b parallèles, ledit élément de support comportant sur son segment médian un dispositif de raccordement 3 sur un bras d'essuie-glace 4. Des embouts 5 peuvent éventuellement être prévus aux extrémités. En se rapportant à la figure 1, les deux rails 2b sont chacun positionnés dans une rainure longitudinale 1b de la partie médiane de la lame1, la lèvre d'essuyage 1a étant positionnée du côté opposé au dispositif de raccordement 3, en particulier contre la vitre 6 du véhicule.

En se rapportant aux figures annexées, la lame d'essuyage 1 a une forme allongée et présente une section pratiquement constante suivant son extension longitudinale. Par « pratiquement », on doit comprendre que la lame 1 peut présenter localement des parties en creux et/ou en relief. La lame 1 a une longueur avantageusement comprise entre 20 cm et 60 cm.

La lame 1 est préférentiellement obtenue par moulage et/ou extrudage, à partir d'un matériau élastique. On utilise préférentiellement du caoutchouc souple, mais on peut utiliser toute autre matière élastique équivalente, souple ou rigide, telle que : élastomères, mousses, éponges, plastiques, fibres naturelles, etc. On peut prévoir une construction à partir d'une seule matière homogène, ou en plusieurs matières différentes. Par exemple, la partie inférieure peut être en mousse ou en textile souple, solidarisée par un procédé adapté (collage, co-injection, co-extrusion, soudure, vulcanisation, ou autre) à la partie médiane qui est quant à elle en caoutchouc rigide. Il en est de même pour la partie supérieure de la lame 1 qui n'est pas nécessairement réalisée dans le même matériau que les autres parties.

La lèvre d'essuyage 1a a section transversale présentant un profil classique du type connu de l'homme du métier, en particulier un profil divulgué dans les documents brevets cités précédemment. Elle est destinée à s'appliquer contre la vitre 6 d'un véhicule et est rattachée à la partie médiane par une entretoise de liaison 10a.

Les rainures longitudinales 1b de la partie médiane sont destinées à recevoir les rails élastiques 2b écartés formant l'élément support du balai d'essuie-glace 2. Les rainures longitudinales 1b ont des dimensions standards leur permettant de recevoir les rails élastiques 2b d'un grand nombre de modèles de balai d'essuie-glace. En particulier, les rainures 1b ont une profondeur d'environ 3 mm, une hauteur d'environ 1.5 mm et sont séparées par une entretoise 10b ayant une épaisseur d'environ 1 mm.

La dorsale 1 c s'étendant vers le haut. Sa base a sensiblement la même largeur que l'enveloppe extérieure de la partie médiane. La dorsale 1 c peut être asymétrique, mais on préfère utiliser une dorsale ayant section transversale présentant un profil symétrique par rapport à un plan de symétrie S passant par son centre et la traversant longitudinalement. Et d'une manière générale, la lame 1 a une section transversale présentant un profil symétrique par rapport au plan de symétrie S.

La dorsale 1c peut avoir une forme de déflecteur du type décrit dans le document WO 2007/011996 (VALEO) dont les caractéristiques sont reprises ici par référence. Toutefois, il n'est pas nécessaire que la dorsale 1c ait initialement la forme d'un déflecteur. En effet, il peut être avantageux d'utiliser une dorsale ayant la forme générale d'un T inversé, la barre verticale 10c et la barre horizontale 11c dudit T étant reliées par des parties courbes 12c. Cette forme permet de servir de brise-glace et/ou de brise-boue. De plus, et comme décrit plus après dans la description, cette forme en T inversée peut prendre la forme d'un déflecteur lorsque la dorsale 1 c a la possibilité de basculer autour de l'entretoise 1 d.

Conformément à l'invention, la dorsale 1c est reliée à la partie médiane de la lame 1, par une entretoise de liaison 1d disposée au-dessus des rainures longitudinales 1b. L'entretoise 1 d est formée entre deux rétrécissements en forme de rainures longitudinales 10d opposées l'une à l'autre. En pratique, les rainures 10d ont une profondeur variant de 1 mm à 4 mm, une hauteur variant de 1 mm à 5 mm et l'entretoise 1d a une épaisseur variant de 1 mm à 4 mm. Toutefois d'autres dimensions peuvent être prévues selon le type de matériau utilisé. En effet, les rainures 10d forment un guide de découpe longitudinal. L'utilisateur pourra ainsi enlever tout ou partie de la dorsale 1c au moyen d'un outil coupant (cutter, couteau, ou autre) en s'aidant du guide de découpe. Selon l'épaisseur de l'entretoise de liaison 1d, cette dernière pourra être arrachée à la main. De cette façon, il n'est pas utile d'utiliser un outil coupant pour enlever la dorsale 1c. L'épaisseur de l'entretoise 1d permettant un arrachement manuel dépend du matériau utilisé. Par exemple, si l'entretoise est en caoutchouc, on prévoit une épaisseur inférieure ou égale à 1 mm.

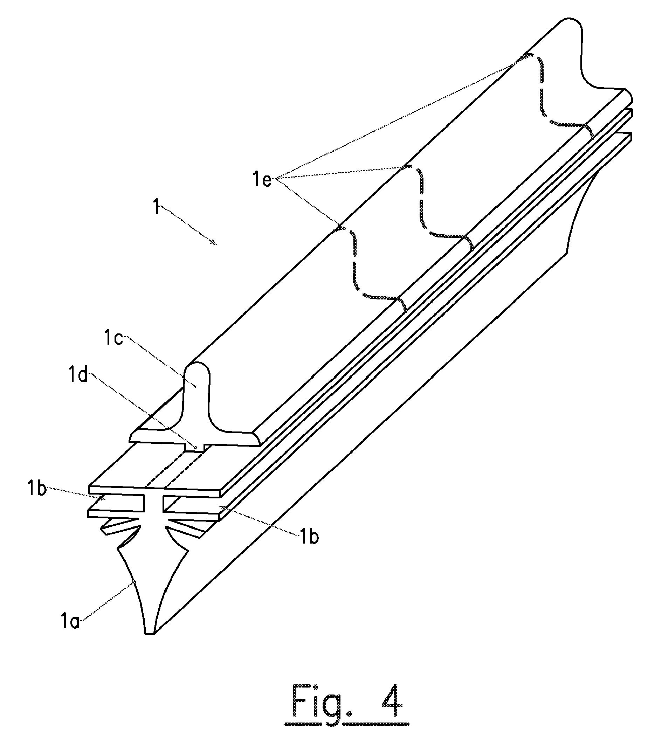

En se rapportant à la figure 4, il peut être avantageux, mais non nécessaire, que la dorsale 1c comporte des marques 1e en relief ou en creux sur son enveloppe extérieure. Par exemple, les marques 1e peuvent se matérialiser sous la forme de lignes d'affaiblissement ayant une épaisseur réduite à quelques dixièmes de millimètres. Ces marques 1e permettent de segmenter la dorsale 1c en différentes zones. En particulier, est comme cela est schématisé sur la figure 5, on peut repérer le segment 13c de la dorsale 1c où va se positionner le dispositif de raccordement 3 sur le bras d'essuie-glace 4 et/ou les segments 15c où vont se positionner les embouts 5 aux extrémités. Avant de positionner les rails élastiques 2b dans les rainures longitudinales 1b de la lame 1, si l'utilisateur doit conserver la dorsale 1c mais doit supprimer ces segments 13c et/ou 15c, il lui suffit de les couper ou de les arracher, en s'aidant du guide de découpe et éventuellement des marques 1e.

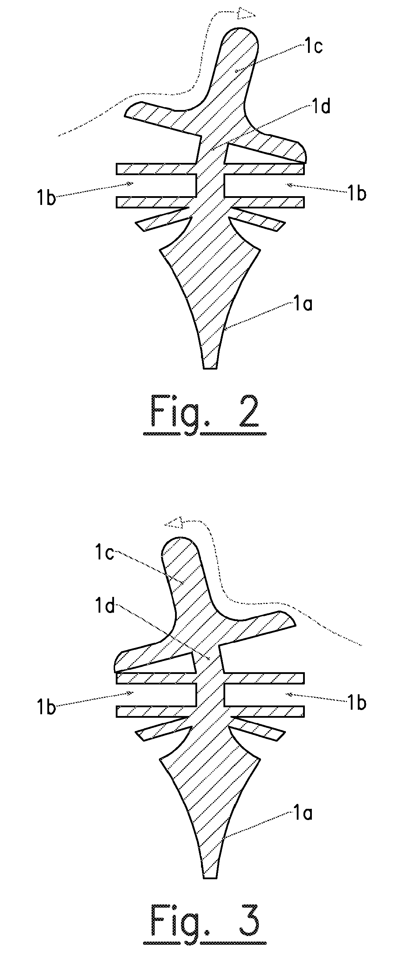

Conformément à l'invention, en comme représentée sur les figures 2 et 3, la dorsale 1c peut basculer autour de l'entretoise 1d. Ainsi, lors de l'avancement du véhicule, la résistance de l'air sur la surface de la dorsale 1c tournée vers le vent (représenté par les flèches en pointillés sur les figures 2 et 3) permet de faire basculer cette dernière autour de l'entretoise 1d de sorte que ladite dorsale forme un déflecteur. En pratique, la résistance de l'air exerce une force sur la dorsale 1c qui tend à faire plier l'entretoise 1d. C'est la déformation de cette dernière qui permet le basculement de la dorsale 1c. Cette faculté de déformation dépend donc du matériau employé, de l'épaisseur de l'entretoise 1d, de la surface de la dorsale 1c ainsi que de la vitesse du véhicule ou plus généralement de la pression de l'air exercée sur la surface de la dorsale 1c tournée vers le vent. Par exemple, pour une lame en caoutchouc dont l'entretoise 1d a une épaisseur d'environ 4 mm et une dorsale 1c ayant une surface tournée vers le vent d'environ 40 cm, ladite dorsale bascule vers sa position maximale à une vitesse d'environ 100 Km/H. L'homme du métier pourra donc jouer sur les matériaux et les dimensions de l'entretoise 1d et de la dorsale 1c pour déterminer une valeur seuil à partir de laquelle ladite dorsale se transforme en déflecteur. Si on utilise un matériau rigide, il est également possible que la dorsale 1c ne puisse pas basculer. On peut également noter que l'angle d'inclinaison de la dorsale 1c varie en fonction de la largeur de sa basse 11c et de la hauteur de l'entretoise 1d.

On précise ici que le basculement de la dorsale 1c n'est pas nécessairement dû au fait que l'entretoise 1d soit formée entre deux rétrécissements en forme de rainures longitudinales 10d opposées l'une à l'autre, lesdites rainures formant un guide de découpe longitudinal. En effet, on peut prévoir une lame 1 ayant cette configuration pour que la dorsale 1c puisse basculer autour de l'entretoise 1d, mais dont les rainures 10d ne servent pas de guide de découpe.

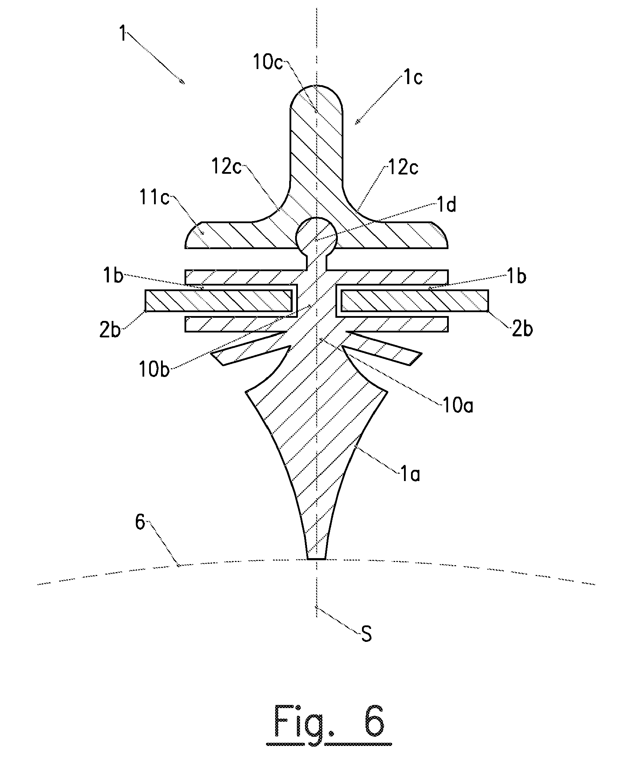

Un autre mode de réalisation de la lame 1 sans guide de découpe est représenté sur la figure 6. Dans ce cas, l'entretoise 1d se présente sous la forme d'une nervure longitudinale à tête arrondie disposée au-dessus des rainures longitudinales 1b de la partie médiane, ladite nervure étant en saillie, dirigée vers le haut. Cette nervure 1d peut s'étendre sur toute la longueur de la lame 1 ou sur certaines portions seulement. La partie inférieure de la base 11c de la dorsale 1c comporte une rainure longitudinale de forme complémentaire de la nervure 1d de sorte que ladite dorsale puisse se connecter (tel un clip et de manière temporaire ou permanente) sur ladite nervure. Du fait de la forme arrondie de cette dernière, on comprend que la dorsale 1c peut basculer. L'ajustement entre la nervure 1d et la forme complémentaire de la dorsale 1c déterminera l'aptitude au basculement.

Selon un autre mode de réalisation non représenté, on peut prévoir une dorsale 1c intégrée dans la lame 1, cette dernière ne comportant aucun guide de découpe et pas nécessairement d'entretoise 1d. La dorsale 1c est du type en forme de T inversé décrit précédemment, et réalisée dans un matériau élastique souple et présente une partie supérieure 10c verticale tellement fine qu'elle peut se déformer pour faire office de déflecteur.

## Revendications

1. Lame d'essuyage en matériau élastique pour balai d'essuie-glace (2), ladite lame comportant :
- une partie inférieure formée par une lèvre d'essuyage (1a),
- une partie médiane comportant des rainures longitudinales (1b) opposées l'une à l'autre,
- une partie supérieure formée par une dorsale (1c) s'étendant vers le haut, **se caractérisant par le fait que** la dorsale (1c) est reliée à la partie médiane par une entretoise de liaison (1d) disposée au dessus des rainures longitudinales (1 b), ladite entretoise étant formée entre deux rétrécissements en forme de rainures longitudinales (10d) opposées l'une à l'autre, lesdites rainures formant un guide de découpe longitudinal.

2. Lame selon la revendication 1, dans laquelle la dorsale (1c) peut basculer autour de l'entretoise (1d).

3. Lame selon l'une des revendications précédentes dans laquelle la dorsale (1c) a une section transversale présentant un profil symétrique par rapport à un plan de symétrie (S) passant par son centre et la traversant longitudinalement.

4. Lame selon l'une des revendications précédentes dans laquelle l'entretoise de liaison (1d) a une épaisseur telle qu'elle puisse être arrachée à la main.

5. Lame selon la revendication 4, dans laquelle l'entretoise de liaison (1d) est en caoutchouc et a une épaisseur inférieure ou égale à 1 mm.

6. Lame selon l'une des revendications précédentes, dans laquelle la dorsale (1c) à la forme générale d'un T inversé, les deux barres (10c, 11c) dudit T étant reliées par des parties courbes (12c).

7. Lame selon l'une des revendications précédentes, dans laquelle la dorsale (1c) comporte des marques (1e) en relief ou en creux sur son enveloppe extérieure, lesdites marques permettant de segmenter ladite dorsale.

8. Balai d'essuie-glace pour véhicule, comportant une lame d'essuyage (1) allongée en matériau élastique montée sur un élément de support allongé formé de deux rails élastiques parallèles (2b), ledit élément de support comportant sur son segment médian un dispositif de raccordement (3) sur un bras d'essuie-glace (4), **se caractérisant par le fait que** la lame d'essuyage (1) est conforme à l'une des revendications précédentes, les deux rails élastiques (2b) étant chacun positionnés dans une rainure longitudinale (1b) de la partie médiane de ladite lame, la lèvre d'essuyage (1a) étant positionnée du côté opposée au dispositif de raccordement (3).

9. Procédé pour monter une lame d'essuyage (1) conforme aux revendications 1 à 7 sur le balai d'essuie-glace (2) conforme à la revendication 8, dans lequel avant de positionner les rails élastiques (2b) dans les rainures longitudinales (1b) de ladite lame, on enlève complètement la dorsale (1c) en s'aidant du guide de découpe.

10. Procédé pour monter une lame d'essuyage (1) conforme aux revendications 1 à 7 sur le balai d'essuie-glace (2) conforme à la revendication 8, dans lequel avant de positionner les rails élastiques (2b) dans les rainures longitudinales (1b) de ladite lame, on enlève, en s'aidant du guide de découpe, le segment médian (13c) de la dorsale (1c) correspondant sensiblement à l'encombrement du dispositif de raccordement (3).

11. Procédé pour monter une lame d'essuyage (1) conforme aux revendications 1 à 7 sur le balai d'essuie-glace (2) conforme à la revendication 8, dans lequel avant de positionner les rails élastiques (2b) dans les rainures longitudinales (1b) de ladite lame, on enlève, en s'aidant du guide de découpe, les segments (15c) de la dorsale (1c) situés aux extrémités de cette dernière, lesdits segments enlevés correspondant sensiblement à l'encombrement de capuchons de protection (5) utilisés pour maintenir en positions lesdits rails élastiques.

12. Véhicule automobile **se caractérisant par le fait qu'**il est équipé du balai d'essuie-glace (2) conforme à la revendication 8, la lèvre (1a) de la lame d'essuyage (1) étant positionnée contre la vitre (6) à essuyer dudit véhicule, **par le fait que** la dorsale (1c) peut basculer autour de l'entretoise (1d), et **par le fait que** lors de l'avancement dudit véhicule, la résistance de l'air sur la surface de la dorsale (1c) tournée vers le vent permet de faire basculer cette dernière autour de l'entretoise (1d) de sorte que ladite dorsale forme un déflecteur.
